# EUROPÄISCHE PATENTANMELDUNG

(11) **EP 2 500 586 A1**
(43) Veröffentlichungstag der Anmeldung: **19.09.2012**
(21) Anmeldenummer: 12153660.1
(22) Anmeldetag: 02.02.2012
(51) Int. Cl.: F16B 5/02, F24J 2/52, F16B 25/00, F16B 25/10

(54) **Stockschraube oder Solarbefestiger zur Befestigung von Anlagen oder Schildern oder Tafeln oder anderen zu befestigenden Gegenständen auf Baukörpern**

(30) Priorität: 18.03.2011 DE 202011004144 U
(71) Anmelder: Etanco GmbH, 57234 Winsdorf-Wilden (DE)
(72) Erfinder: Violet, Jean-Cédric, 67500 Haguenau (FR)
(74) Vertreter: Solf, Alexander

(57) **Zusammenfassung**

Die Erfindung betrifft eine Befestigungseinrichtung zur Befestigung von Anlagen oder Schildern oder Tafeln oder anderen zu befestigenden Gegenständen auf Baukörpern, z.B. auf Trapez- oder Wellblechdächern oder Trapez- oder Wellblechfassaden, insbesondere aus Stahl oder Aluminium, oder auf Faserzementwellplattendächern oder Faserzementwellplattenfassaden oder auf Dächern oder Fassaden mit Sandwichelementen, bestehend aus Stahlblechen mit Hartschaumkern, wobei die Befestigungseinrichtung
- eine Kombination aus einer einstückigen Stockschraube (1,10) mit einem Holzschraubengewindeschaft (2) mit selbstbohrender, insbesondere reduzierter Bohrspitze (3) oder mit einem Gewindeschaft (11) mit furchendem Stahlgewinde mit selbstbohrender Bohrspitze (12)
oder
- eine Kombination aus einem zweiteiligen Solarbefestiger (13,21) mit einem Holzschraubengewindeschaft (14) mit selbstbohrender, insbesondere reduzierter Bohrspitze (15) oder mit einem Gewindeschaft (22) mit furchendem Stahlgewinde mit selbstbohrender Bohrspitze (23)
ist.

## Beschreibung

Die Erfindung betrifft eine Stockschraube oder einen Solarbefestiger zur windlastsicheren und hohe Lasten tragenden Befestigung von Anlagen, wie z. B. Photovoltaikanlagen, Solarkollektoren oder dergleichen Anlagen oder Schildern oder Tafeln oder anderen zu befestigenden Gegenständen auf verschiedenen Baukörpern. Baukörper im Sinne der Erfindung sind insbesondere Dächer oder Fassaden, z. B. Trapez- oder Wellblechdächer oder Trapez- oder Wellblechfassaden, insbesondere Dächer oder Fassaden aus Aluminium oder Stahl, oder Faserzementwellplattendächer oder Faserzementwellplattenfassaden oder Dächer oder Fassaden mit Sandwichelementen, bestehend aus Stahlblechen mit Hartschaumkern.

Für die Befestigung von Anlagen auf Dächern sind Vorrichtungen aufweisend eine oder mehrere Montageschrauben und eine Kalotte insbesondere zur Befestigung auf Trapez- und Wellblechdächern bekannt. Gemäß der DE 20 2006 014 469 U1 ist bekannt, eine an die Raumform der Oberfläche der Hochsicke eines Trapezblechdaches angepasste trapezförmige Befestigungskalotte mit drei Montageschrauben zu kombinieren. Bekannt ist auch eine an die Raumform der Oberfläche der Hochsicke eines Wellblechdachs angepasste zylinderschalenförmige Kalotte mit mindestens einer Montageschraube zu kombinieren.

Als Montageschraube dient z. B. eine Schraube mit Schraubenkopf und Gewindeschaft, wobei als zweites Teilstück auf deren Schraubenkopf auf der dem Gewindeschaft gegenüberliegenden Seite axial ein Gewindestift mit einem metrischen Gewinde befestigt, z. B. angeschweißt ist. Das metrische Gewinde wird mit Muttern bestückt und am Gewinde wird die jeweilige Anlage, z. B. die Photovoltaikanlage oder die Solaranlage befestigt.

Diese Art einer zweiteiligen Montageschraube wird auf dem Markt als "Solarbefestiger" angeboten und wird im Folgenden auch als Solarbefestigerschraube bezeichnet. Der Schraubenschaft dieser Montageschraube trägt ein Gewinde, das entweder für das Einschrauben in Holz oder Stahl geeignet ist und das für die Befestigung der Montageschraube an einer Dachunterkonstruktion eingerichtet ist. Die Dachunterkonstruktion muss zu diesem Zweck vorgebohrt werden.

Für die Befestigung von Anlagen, Schildern oder Tafeln auf Trapez- oder Wellblechdächern oder Trapez- oder Wellblechfassaden ist gemäß der DE 20 2010 010 858 U1 eine Befestigungsvorrichtung vorgesehen, aufweisend eine Befestigungskalotte und eine Montageschraube, wobei die Montageschraube ein Durchgriffsloch in der Befestigungskalotte durchgreift und, eine Hochsicke des Trapez- oder Wellblechs des Dachs oder der Fassade durchgreifend, in eine Dach- oder Fassadenunterkonstruktion schraubbar ist. Die Montageschraube ist dabei als eine einstückige Stockschraube oder als eine zweiteilige Solarbefestigerschraube ausgebildet und weist einen Gewindeschaft mit einem metrischen Gewinde auf, welches mit Muttern bestückt ist und an dem die jeweilige Anlage befestigt ist. An diesen Gewindeschaft schließt sich im Falle der Stockschraube einstückig ein glatter Durchgriffsschaft mit einer Dichtungseinrichtung an, welcher in einen Holzschraubengewindeschaft übergeht, wobei der Holzschraubengewindeschaft zur Befestigung der Montageschraube an einer Dach- oder Fassadenunterkonstruktion dient. Im Falle der Solarbefestigerschraube schließt sich an den besagten Gewindeschaft mittels einer Schweißnaht ein glatter Freischnittschaft mit einer Dichtungseinrichtung an, der in einen weiteren Gewindeschaft mit einem Holzschraubengewinde oder einem furchenden Stahlgewinde übergeht und ebenfalls für die Befestigung der Montageschraube an einer Dach- oder Fassadenunterkonstruktion eingerichtet ist. In jedem Fall muss die Dach-oder Fassadenunterkonstruktion zu diesem Zweck vorgebohrt werden. Dies ist mit zusätzlichem Arbeitsaufwand verbunden.

Bekannt ist außerdem gemäß DE 10 2006 020 630 A1 eine Bohrschraube, aufweisend einen Schraubenkopf, daran angrenzend einen glatten Schraubenschaft und angrenzend an den glatten Schraubenschaft einen Schraubengewindeschaft mit Grobgewinde, insbesondere für Holzunterkonstruktionen. Die Schraubenspitze kann eine reduzierte Bohrspitze oder eine Schneidkerbe aufweisen. Zudem sind, z. B. unter dem Namen Mage "Topex" oder Etasol "Drillnox", Bohrschrauben auf dem Markt bekannt, die einen Schraubenkopf, daran angrenzend einen glatten Schraubenschaft mit einem auf dem Schraubenschaft sitzenden Dichtring und an den Schraubenschaft angrenzend einen Gewindeschaft mit Holzschraubengewinde oder mit furchendem Stahlgewinde aufweisen, wobei der Gewindeschaft in eine selbstbohrende, im Falle eines Holzschraubengewindes zusätzlich reduzierte, Bohrspitze übergeht. Ein Gewinde oder dergleichen zur Befestigung von Anlagen, Schildern oder Tafeln ist bei diesen Bohrschrauben nicht vorgesehen.

Aufgabe der Erfindung ist die Bereitstellung einer Stockschraube oder eines Solarbefestigers für auf Baukörpern, insbesondere Dächern oder Fassaden, zu befestigenden Anlagen, Schildern, Tafeln oder anderen zu befestigenden Gegenständen, die den für die Anbringung der Montageschraube erforderlichen Arbeitsaufwand reduziert.

Diese Aufgabe wird durch die Merkmale des Anspruchs 1 gelöst. Vorteilhafte Weiterbildungen der Erfindung werden in den Unteransprüchen gekennzeichnet.

Die Erfindung sieht demgemäß die Verwendung einer im Wesentlichen bekannten Stockschraube oder eines an sich bekannten Solarbefestigers, die mit einer selbstbohrenden Bohrspitze, insbesondere bei Holzunterkonstruktionen mit einer reduzierten selbstbohrenden Bohrspitze, kombiniert wird. Die erfindungsgemäße Montageschraube ist derart beschaffen, dass sie zusätzlich auch in Kombination mit einer bekannten Befestigungskalotte in bekannter Art und Weise verwendet werden kann.

Anhand der Zeichnungen wird die Erfindung im Folgenden beispielhaft näher erläutert. Es zeigen:
- Fig. 1: eine Seitenansicht einer erfindungsgemäßen Stockschraube mit Holzschraubengewinde und selbstbohrender Bohrspitze;
- Fig. 2: eine Seitenansicht einer erfindungsgemäßen Stockschraube mit furchendem Stahlgewinde und selbstbohrender Bohrspitze;
- Fig. 3: eine Seitenansicht eines erfindungsgemäßen Solarbefestigers mit Holzschraubengewinde und selbstbohrender Bohrspitze;
- Fig. 4: eine Seitenansicht eines erfindungsgemäßen Solarbefestigers mit furchendem Stahlgewinde und selbstbohrender Bohrspitze.

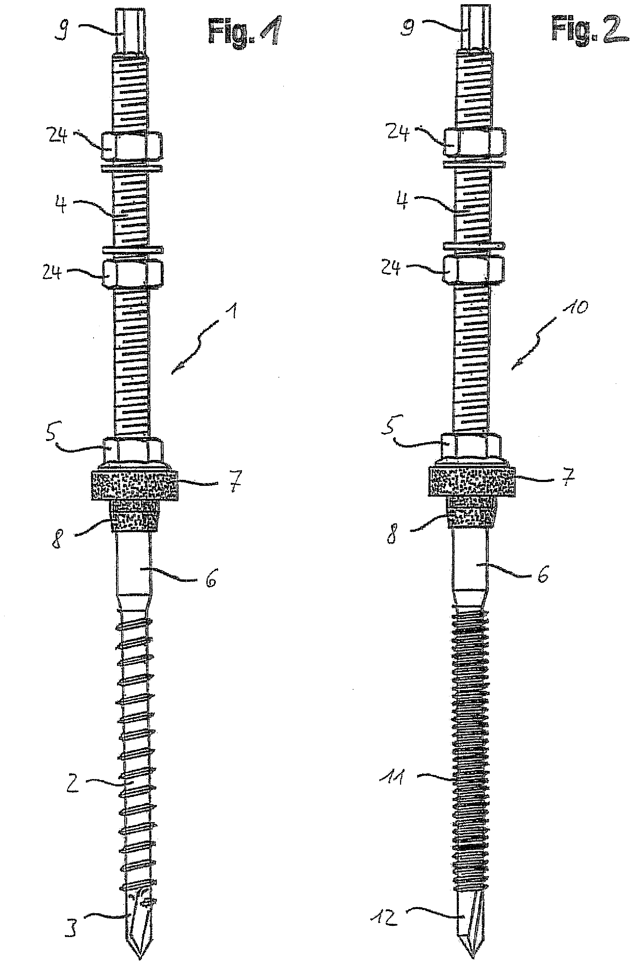

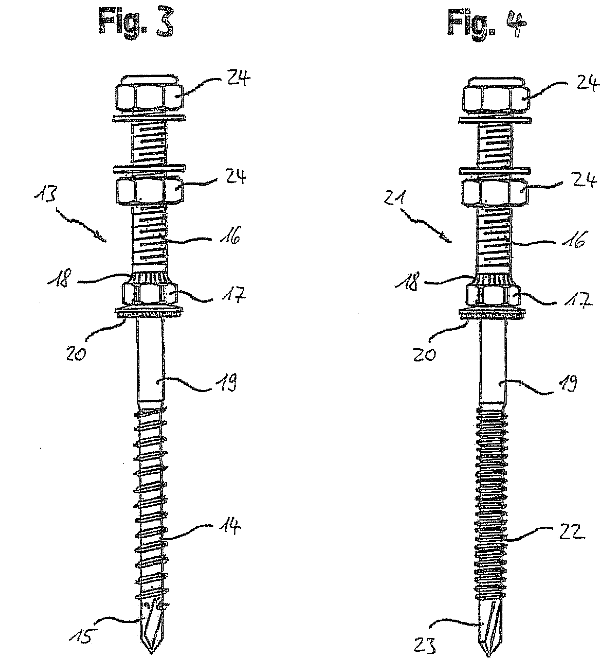

Eine erfindungsgemäße Befestigungseinrichtung kann als eine Stockschraube 1, 10 (Fig. 1, 2) oder als eine Solarbefestigerschraube 13, 21 (Fig. 3, 4) ausgeführt sein und ist insbesondere für Holz- oder Metallunterkonstruktionen ausgebildet.

Die Stockschraube 1, 10 ist einstückig ausgebildet (einstückig meint, dass die Schraube aus einem einzigen Metallteil gefertigt ist) und weist oberendig einen kantigen, insbesondere sechskantigen Schaftbereich 9 (eine so genannte Aufnahme) auf, an den ein entsprechendes Werkzeug zum Drehen der Stockschraube 1, 10 angesetzt werden kann.

Es schließt sich nach unten ein Gewindeschaft 4 mit einem metrischen Gewinde an, der in einen glatten Durchgriffsschaft 6 übergeht. An den Durchgriffsschacht 6 schließt sich bei der Stockschraube 1 gemäß Fig. 1 ein Gewindeschaft 2 mit einem Holzschraubengewinde an, welcher in eine selbstbohrende, vorzugsweise reduzierte Bohrspitze 3 übergeht oder es schließt sich an den Durchgriffsschaft 6 gemäß Fig. 2, für eine Stockschraube 10, ein Gewindeschaft 11 mit einem furchenden Stahlgewinde für Metallunterkonstruktionen an, der in eine selbstbohrende Bohrspitze 12 übergeht.

Auf dem unteren Ende des metrischen Gewindes sitzt eine Mutter 5, insbesondere Sechskantmutter, vorzugsweise eine Sperrzahnmutter aufgeschraubt, die vom Durchgriffsschaft 6 abgestützt und gekontert wird und somit fest sitzend angeordnet werden kann.

Unterhalb der Mutter 5 befindet sich eine Dichtungseinrichtung, die einen zylindrischen Dichtring 7 aus einem elastischen Dichtmaterial aufweist, z. B. formschlüssig auf dem Durchgriffsschaft 6 der Stockschraube 1, 10 sitzend. Der Dichtring 7 hat einen nach unten weisenden Dichtringfortsatz 8 geringeren Durchmessers, so dass der Dichtringfortsatz 8 das entsprechende Bohrloch im Baukörper zumindest formschlüssig, vorzugsweise aber kraftschlüssig durchgreifen kann. Der Dichtring 7 der Dichteinrichtung sitzt nach dem Einschrauben der Stockschraube 1, 10 in den Baukörper bzw. in dessen Unterkonstruktion z. B. die Dach- oder Fassadenunterkonstruktion außenseitig abdichtend direkt auf dem Baukörpermaterial auf.

Mit auf dem metrischen Gewinde des Gewindeschafts 4 steckenden Muttern 24 wird eine auf einem Baukörper, z. B. einem Dach oder auf einer Fassade, insbesondere auf einem Faserzementwellplattendach oder einer Faserzementwellplattenfassade, oder einem Aluminium- oder Stahlwellblechdach oder einer Aluminium- oder Stahlwellblechfassade, einem Aluminiumtrapez- oder Stahltrapezdach oder einer Aluminiumtrapez- oder Stahltrapezfassade, oder auf einem Dach oder auf einer Fassade in Sandwichbauweise, insbesondere bestehend aus PUR-Hartschaum welcher zwischen zwei Stahlblechen angeordnet ist, zu befestigende Anlage, z. B. Solaranlage oder Photovoltaikanlage bzw. eine Beschilderung oder eine Informationstafel oder ein anderer zu befestigender Gegenstand befestigt, wenn die erfindungsgemäße Stockschraube 1, 10 an dem Baukörper entsprechend befestigt ist, z. B. durch das Dach- oder Fassadenmaterial in die Dachunterkonstruktion geschraubt ist. Ein Vorbohren des Baukörpers ist dabei auf Grund der selbstbohrenden Bohrspitze 3, 12 nicht erforderlich.

Eine alternative Ausführungsform der Erfindung ist der Solarbefestiger 13 gemäß Fig. 3, die im unteren Endbereich einen Gewindeschaft 14 mit einem Holzschraubengewinde aufweist, welcher nach unten in eine selbstbohrende, vorzugsweise reduzierte Bohrspitze 15 und nach oben in einen glatten Freischnittschaft 19 einstückig übergeht, oder der Solarbefestiger 21 gemäß Fig. 4, die im unteren Endbereich einen Gewindeschaft 22 mit einem Schraubgewinde für Metall aufweist, welcher nach unten in eine selbstbohrende Bohrspitze 23 und nach oben ebenfalls in einen glatten Freischnittschaft 19 einstückig übergeht.

Auf dem Freischnittschaft 19 des Solarbefestigers 13, 21 sitzt einstückig ausgebildet ein mehrkantiger, z. B. sechskantiger Schraubenkopf 17. Auf dem Schraubenkopf 17 ist mit einer Schweißnaht 18 ein ein metrisches Gewinde aufweisender Gewindeschaft 16 aufgeschweißt derart, dass die Achsen der Gewindeschäfte 14 und 16 bzw. 22 und 16 fluchten. Unterhalb des Schraubenkopfes 17 sitzt auf dem Freischnittschaft 19 eine Dichtungseinrichtung mit einem Dichtring 20 aus elastischem Dichtmaterial, wobei der Dichtring 20 nach dem Einschrauben der Solarbefestigerschraube 13, 21 außenseitig bzw. oberseitig abdichtend direkt auf dem Material des jeweiligen Baukörpers aufsitzt.

Wie im vorangehenden Beispiel wird mit auf dem metrischen Gewinde des Gewindeschafts 16 steckenden Muttern 24 eine auf einem Baukörper, z. B. einem Dach oder auf einer Fassade, insbesondere auf einem Faserzementwellplattendach oder einer Faserzementwellplattenfassade, oder einem Trapez- oder Wellblechdach oder einer Trapez- oder Wellblechfassade, insbesondere aus Stahl oder Aluminium, oder auf einem Dach oder auf einer Fassade in Sandwichbauweise, insbesondere bestehend aus PUR-Hartschaum welcher zwischen zwei Stahlblechen angeordnet ist, zu befestigende Anlage, z. B. Solaranlage oder Photovoltaikanlage bzw. eine Beschilderung oder eine Informationstafel oder ein anderer zu befestigender Gegenstand befestigt, wenn der erfindungsgemäße Solarbefestiger 13, 21 entsprechend am Baukörper befestigt ist, z. B. durch das Dach- oder Fassadenmaterial in die Dachunterkonstruktion geschraubt ist.

Auf Grund der selbstbohrenden Bohrspitze 15, 23 ist bei dieser Ausführungsform ebenfalls kein gesondertes Vorbohren des Baukörpers erforderlich.

Die reduzierte Bohrspitze 3 der erfindungsgemäßen Stockschraube 1 bzw. die reduzierte Bohrspitze 15 des erfindungsgemäßen Solarbefestigers 13 ist entsprechend dem Stand der Technik in bekannter Art und Weise ausgeführt und weist demgemäß einen gegenüber dem Gewindeschaft 2 bzw. 14 in üblichem Maße leicht verringerten Durchmesser auf.

Zudem ist die erfindungsgemäße Befestigungseinrichtung in Form der Stockschraube oder des Solarbefestigers derart beschaffen, dass sie ergänzend mit einer aus dem Stand der Technik bekannten Befestigungskalotte, z. B. zu einer Befestigungsvorrichtung gemäß DE 20 2010 010 858 U1, kombiniert werden kann. Dabei durchgreift die Befestigungseinrichtung in bekannter Art und Weise das Durchgriffsloch einer Kalotte und kann z. B. durch eine Hochsicke eines Blechdachs in die Dachunterkonstruktion geschraubt werden.

Die erfindungsgemäße Befestigungseinrichtung ermöglicht die Befestigung von Anlagen, z. B. Solaranlagen oder Photovoltaikanlagen, oder Beschilderungen oder Tafeln oder anderen zu befestigenden Gegenständen, auf weiteren Baukörpern als nur auf den üblichen Trapez- und Wellblechdächern oder -Fassaden. Die Befestigungseinrichtung kann sowohl in Kombination mit einer an sich bekannten Kalotte als auch insbesondere hinsichtlich einer aufwands- und kostengünstigeren Befestigung ohne Kalotte verwendet werden. Eine Reduzierung des Arbeitsaufwandes wird zudem insbesondere durch die Verwendung der selbstbohrenden Bohrspitze erreicht, weil das Bohren und Gewindeformen in einem Zug erfolgt. Ein separates Vorbohren eines Baukörpers ist somit nicht mehr erforderlich. Die Verwendung einer reduzierten Bohrspitze ermöglicht außerdem, insbesondere durch besseren Abtransport des Untergrundmaterials, ein einfaches und sicheres Eindrehen des Gewindeschafts der erfindungsgemäßen Befestigungseinrichtung in eine Holzunterkonstruktion ohne eine Beschädigung z. B. in Form von Lattenbruch oder Aufplatzen des Materials der Holzunterkonstruktion zu verursachen. Überdies verhindert die reduzierte Bohrspitze ein Zurückdrehen der Befestigungseinrichtung im Untergrundmaterial.

## Patentansprüche

1. Befestigungseinrichtung zur Befestigung von Anlagen oder Schildern oder Tafeln oder anderen zu befestigenden Gegenständen auf Baukörpern, z.B. auf Trapez- oder Wellblechdächern oder Trapez- oder Wellblechfassaden, insbesondere aus Stahl oder Aluminium, oder auf Faserzementwellplattendächern oder Faserzementwellplattenfassaden oder auf Dächern oder Fassaden mit Sandwichelementen, bestehend aus Stahlblechen mit Hartschaumkern
**dadurch gekennzeichnet, dass**
die Befestigungseinrichtung
- eine Kombination aus einer einstückigen Stockschraube (1, 10) mit einem Holzschraubengewindeschaft (2) mit selbstbohrender, insbesondere reduzierter Bohrspitze (3) oder mit einem Gewindeschaft (11) mit furchendem Stahlgewinde mit selbstbohrender Bohrspitze (12)
oder
- eine Kombination aus einem zweiteiligen Solarbefestiger (13, 21) mit einem Holzschraubengewindeschaft (14) mit selbstbohrender, insbesondere reduzierter Bohrspitze (15) oder mit einem Gewindeschaft (22) mit furchendem Stahlgewinde mit selbstbohrender Bohrspitze (23)
ist.

2. Befestigungseinrichtung nach Anspruch 1,
**dadurch gekennzeichnet, dass**
die Stockschraube (1, 10) einen Gewindeschaft (4) mit einem metrischen Gewinde aufweist, an den sich der Holzschraubengewindeschaft (2), welcher in die Bohrspitze (3) übergeht, oder der Gewindeschaft (11) mit einem furchenden Stahlgewinde, der in die Bohrspitze (12) übergeht, anschließt, wobei eine Mutter (5), insbesondere eine Sperrzahnmutter auf das metrische Gewinde geschraubt ist.

3. Befestigungseinrichtung nach Anspruch 2,
**dadurch gekennzeichnet, dass**
der Gewindeschaft (4) mit einem metrischen Gewinde in einen glatten Durchgriffsschaft (6) übergeht, an den sich der Holzschraubengewindeschaft (2) oder der Gewindeschaft (11) mit einem furchenden Stahlgewinde anschließt, wobei die Mutter (5) vom Durchgriffsschaft (6) abgestützt und gekontert wird.

4. Befestigungseinrichtung nach Anspruch 2 oder 3,
**dadurch gekennzeichnet, dass**
unterhalb der Mutter (5) eine Dichteinrichtung mit einem Dichtring (7) sitzt für eine oberseitige Abdichtung des Bohrlochs des jeweiligen Baukörpermaterials.

5. Befestigungseinrichtung nach Anspruch 4,
**dadurch gekennzeichnet, dass**
der Dichtring (7) einen Dichtringfortsatz (8) geringeren Durchmessers aufweist für eine form-, insbesondere aber kraftschlüssige Abdichtung des Bohrlochs.

6. Befestigungseinrichtung nach einem der Ansprüche 2 bis 5,
**dadurch gekennzeichnet, dass**
die Stockschraube (1, 10) oberendig an den Gewindeschaft (4) anschließend eine kantige Aufnahme (9) zum Ansetzen eines Werkzeugs aufweist.

7. Befestigungseinrichtung nach Anspruch 1,
**dadurch gekennzeichnet, dass**
bei dem Solarbefestiger (13, 21) die selbstbohrende reduzierte Bohrspitze (15) bzw. die selbstbohrende Bohrspitze (23) nach oben einstückig in den Gewindeschaft (14) bzw. (22) übergeht, auf dem einstückig ausgebildet ein mehrkantiger Schraubenkopf (17) sitzt, auf den mit einer Schweißnaht (18) ein ein metrisches Gewinde aufweisender Gewindeschaft (16) aufgeschweißt ist.

8. Befestigungseinrichtung nach Anspruch 7,
**dadurch gekennzeichnet, dass**
der obere Bereich des Gewindeschafts (14) bzw. (22) als ein glatter Freischnittschaft (19) ausgebildet ist, so dass der Schraubenkopf (17) auf dem Freischnittschaft (19) sitzt.

9. Befestigungseinrichtung nach Anspruch 8,
**dadurch gekennzeichnet, dass**
unterhalb des Schraubenkopfes (17) auf dem Freischnittschaft (19) eine Dichteinrichtung mit einem Dichtring (20) aus elastischem Dichtmaterial für eine oberseitige Abdichtung des Bohrlochs des jeweiligen Baukörpermaterials sitzt.

10. Befestigungsanordnung einer an einem Baukörper, z.B. einem Trapez- oder Wellblechdach oder einer Trapez- oder Wellblechfassade, insbesondere aus Stahl oder Aluminium, oder einem Faserzementwellplattendach oder einer Faserzementwellplattenfassade oder an einem Dach oder einer Fassade mit Sandwichelementen, bestehend aus Stahlblechen mit Hartschaumkern, befestigten Anlage, Tafel oder eines Schilds oder eines anderen zu befestigenden Gegenstands,
**dadurch gekennzeichnet, dass**
a) mehrere Befestigungseinrichtungen nach einem oder mehreren der Ansprüche 1 bis 9 in den Baukörper eingeschraubt sind oder den Baukörper, z.B. ein Dach oder eine Fassade durchgreifend in die entsprechende Unterkonstruktion ein- bzw. angeschraubt sind, wobei jeweils der Dichtring (7, 20) unmittelbar auf der Außenseite des Baukörpers aufsitzt und wobei sich die Mutter (5) im Falle der Verwendung einer Stockschraube (1, 10) oder der Schraubenkopf (17) im Falle der Verwendung eines Solarbefestigers (13, 21) oberhalb des Baukörpermaterials befindet und die Dichtungseinrichtung unterhalb der Mutter (5) bzw. des Schraubenkopfes (17) das beim Einschrauben der Befestigungseinrichtung in den Bohrkörper entstehende Bohrloch gegen Wasserdurchtritt abdichtet,
b) die Anlage, das Schild, die Tafel oder der andere zu befestigende Gegenstand mittels des metrischen Gewindes des Gewindeschafts (4) im Falle der Verwendung einer Stockschraube (1, 10) oder des Gewindeschafts (16) im Falle der Verwendung eines Solarbefestigers (13, 21) und jeweils mittels Muttern (24) befestigt ist.
